# EUROPEAN PATENT APPLICATION

(11) **EP 2 884 422 A1**
(43) Date of publication of application: **17.06.2015**
(21) Application number: 13275306.2
(22) Date of filing: 10.12.2013
(51) Int. Cl.: G06K 9/00, G06K 9/32

(54) **Data processing method and system**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A data processing method and system are disclosed for processing hyperspectral image data of a scene for locating targets within the scene. The method comprises receiving hyperspectral image data from a scene at a receiver, the receiver comprising a plurality of receiver elements, each element being arranged to receive hyperspectral image data from a portion of the scene. The method further comprises comparing the hyperspectral image data received at each element with hyperspectral image data corresponding to known targets and assigning each element with a target label in dependence upon the comparison between the hyperspectral image data received at the element with hyperspectral image data of the known targets. The method further comprises combining elements of the receiver having the same target label, and which are located within a predefined range of each other, to determine the location of the target within the scene.

## Description

The present invention relates to a data processing method and system, and particularly, but not exclusively, to a data processing method and system for processing hyperspectral image data of a scene for locating targets within the scene.

Different materials and objects reflect and emit different wavelengths of electromagnetic radiation. Hyperspectral imaging involves collecting images of objects within a scene at multiple wavelengths of the electromagnetic spectrum using a sensor. The spectrum of radiation captured at each pixel of the sensor can then be analysed to provide information about the makeup of the objects observed by the pixel.

Hyperspectral imaging techniques facilitate the locating and identifying of objects within the scene with high accuracy, provided prior spectral information of the objects is available. If no prior knowledge is available, then the technique is limited to the locating and identifying of objects which are highly anomalous with the scene background.

The performance of hyperspectral methods is dependent on the extent and accuracy of the predetermined spectral information. However, atmospheric conditions for example, can attenuate and otherwise degrade the typical spectrum reflected off objects within the scene, which degrades the signal that can be observed by an imaging system. This reduces the ability of the hyperspectral technique to discriminate one object from another.

Several different atmospheric correction techniques have been proposed, but these techniques can be slow and require large amounts of data for an accurate correction to be applied.

In addition to the above problems, detection algorithms which process the hyperspectral image data require statistics about the data in order to improve the detection of objects. The calculation of the statistics can also be slow and require large amounts of data for accurate calculation. These issues impede the use of high fidelity hyperspectral techniques for high speed or real time applications.

In accordance with the present invention as seen from a first aspect, there is provided a data processing method for processing hyperspectral image data of a scene for locating targets within the scene, the method comprising:
a) receiving hyperspectral image data from a scene at a receiver, the receiver comprising a plurality of receiver elements, each element being arranged to receive hyperspectral image data from a portion of the scene;
b) comparing the hyperspectral image data received at each element with hyperspectral image data corresponding to known targets;
c) assigning each element with a target label in dependence upon the comparison between the hyperspectral image data received at the element with hyperspectral image data of the known targets; and,
d) combining elements of the receiver having the same target label, and which are located within a predefined range of each other, to determine the location of a target within the scene.

In an embodiment, the method comprises the additional step of generating a set of scores for each element, each score being representative of the comparison, such as a similarity, between the hyperspectral image data received at the element with hyperspectral image data of the known targets. The target labels are then assigned by comparing the scores of the set with a threshold range, whereby the element may be labelled corresponding to the target having the score outside of the threshold range. For example, the hyperspectral image data received at the receiver element, such as a pixel of the receiver, may substantially correspond with a particular target, in which case the score corresponding to this target may be outside the threshold range, such as above a threshold value.

The elements of the receiver which are labelled with the same label and which reside within a predefined number of elements from each other are beneficially combined to represent a single target detection within the scene.

In an embodiment, the hyperspectral image data received at each element is processed to correct the data for signal attenuation, such as atmospheric absorption and scattering, prior to comparing the data with hyperspectral image data of known targets.

In an embodiment, the method further comprises outputting a signal to a display device for displaying an overlay of a representation of each detected target on an image of the scene, the or each representation being displayed at the detected location of the corresponding target on the scene image.

In accordance with a second aspect of the present invention, there is provided a data processing system for processing hyperspectral image data of a scene for locating targets within the scene, the system comprising:
- a receiver having a plurality of receiver portions for separately receiving hyperspectral image data from a portion of the scene;
- a repository of hyperspectral image data of known targets;
- a processor for comparing the hyperspectral image data received at each element with hyperspectral image data of the known targets stored in the repository, and assigning each element with a target label in dependence upon the comparison between the received hyperspectral image data and hyperspectral image data of the known targets; and,
- a target combiner which is arranged to combine elements of the receiver having the same target label, within a pre-defined range of elements, to determine the location of the target within the scene.

Preferably, the processor is further arranged to generate a set of scores for each element, each score being representative of the comparison, for example a similarity, between the received hyperspectral image data and hyperspectral image data of the known targets.

The system further comprises communication means for communicatively coupling the receiver, repository, processor and target combiner.

Embodiments of the invention will now be described by way of example only and with reference to the accompanying drawings, in which:
Figure 1 is a schematic illustration of the a system according to an embodiment of the present invention;
Figure 2a is a schematic illustration of the receiver, showing the receiver elements;
Figure 2b is a schematic illustration of a display of the scene on a display device, showing the scene portions;
Figure 2c is a schematic illustration of a display of the scene on a display device, with overlaid representations of the targets; and,
Figure 3 is a flowchart sequencing the steps associated with a method according to an embodiment of the present invention.

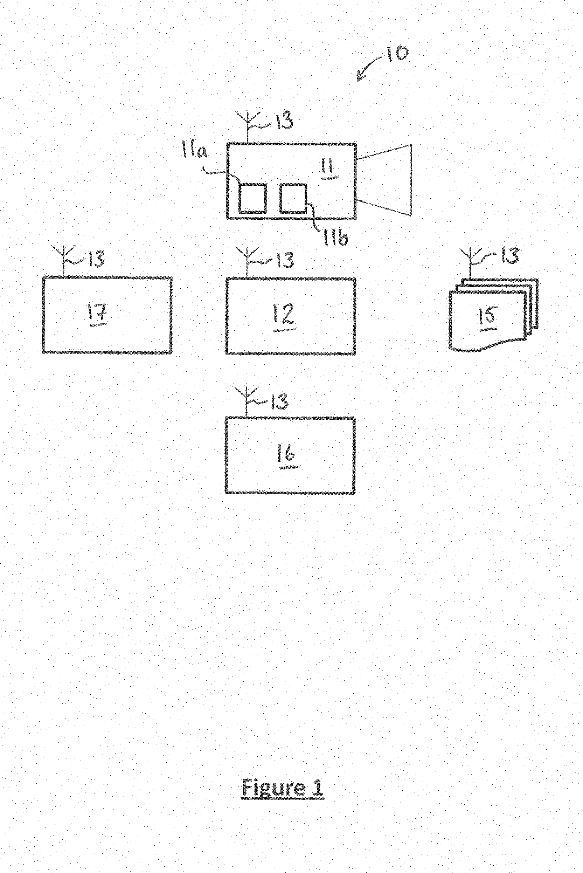

Referring to figure 1 of the drawings, there is illustrated a system 10 according to an embodiment of the present invention for processing hyperspectral image data of a scene to facilitate the location of targets within a scene. The system comprises a receiver 11 which is arranged to receive hyperspectral image data and transmit the data to a processor 12 via a communication link 13, which may comprise a wireless or wired link. In this respect, the receiver 11 may be located remote from the processor 12, such as upon an aircraft (not shown). The system 10 further comprises conventional user interface devices (not shown) for enabling users (not shown) of the system 10 to interact with the system 10 and enter commands and data, for example.

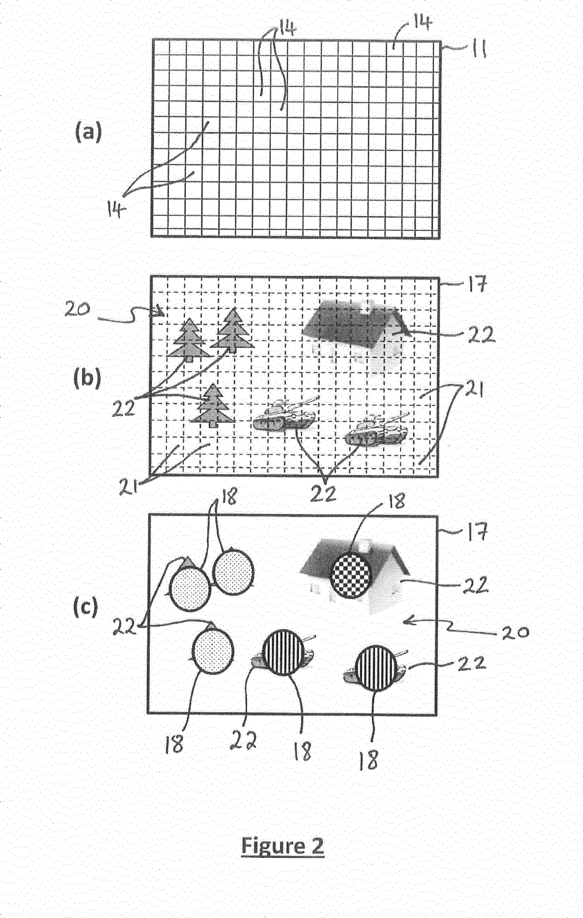

The receiver 11 comprises a plurality of receiver elements 14, such as pixels arranged to a grid of rows and columns as illustrated in figure 2 of the drawings, each element 14 being arranged to receive hyperspectral image data from a portion 21 of the scene 20. The elements 14 of the receiver 11 are matched to a respective location within the scene 20, such that data received at a particular element 14 corresponds to a particular location within the scene 20. This is achieved using a positioning device 11a associated with the receiver 11, which is arranged to determine the location of the receiver 11, and a gyroscope 11b associated with the receiver 11, which is arranged to determine the relative orientation of the receiver 11. The positioning device 11 a and gyroscope 11 b are arranged to output a signal to the processor 12 via the communication link 13, so that the processor can determine the viewing direction of the receiver 11 and thus the location of the scene portions 21 viewed by the elements 14 of the receiver 11.

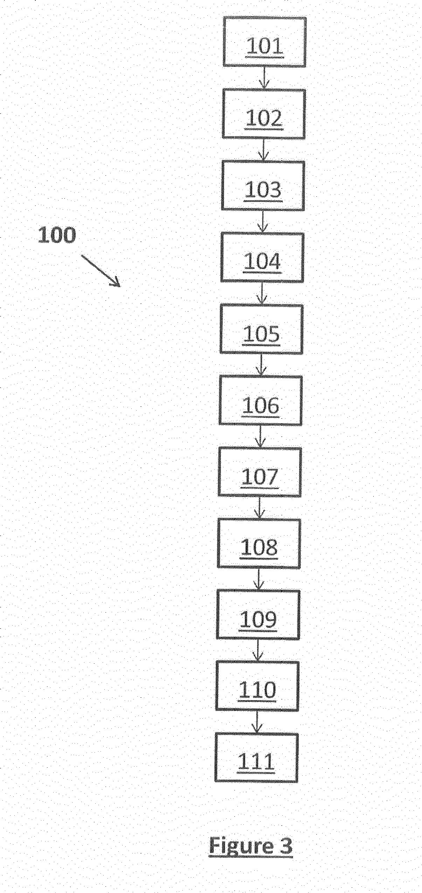

Referring to figure 3 of the drawings, there is illustrated a method 100 of processing hyperspectral image data according to an embodiment of the present invention for locating targets 22 within a scene 20. The image data which is received at each element 14 of the receiver 11 at step 101 may comprise a spectral profile which is communicated via the link 13 to the processor 12 at step 102, which subsequently processes the data to correct for signal attenuation resulting from atmospheric effects, such as absorption and scattering, at step 103, and also to acquire statistical parameters for the data. The system 10 further comprises a repository 15, such as a memory storage device, communicatively coupled with the processor 12 via a wireless or wired link 13, which holds hyperspectral image data corresponding to a plurality of known targets 22. The processor 12 is arranged to process the corrected image data corresponding to each element 14 and subsequently compare the corrected data with the data corresponding to the known targets 22 at step 104.

The processor 12 generates a set of scores for each element 14 of the receiver at step 105, each score of the set being representative of the degree of similarity or conformity of the corrected data with hyperspectral image data of a respective known target 22. The set of scores for each element 14 are then compared with a predefined threshold range at step 106. The threshold range is used to determine whether the data received at each element 14 relates to a target held in the repository 15. For example, a score falling inside the range may be deemed not to correspond with a target 22, whereas a score falling outside the range may indicate that the corrected data substantially conforms with a known target spectra. In situations where a score for a particular element 14 relates to an identification of a known target 22, then that element 14, which relates to a particular location within the scene 20, can be used to determine the location of the target 22, within the scene 20. The processor 12 subsequently labels the element at step 107 with a label representative of the particular target 22.

In an embodiment, the processor 12 is arranged to sequentially process the hyperspectral image data corresponding to each row of elements 14 of the receiver 11. This is found to reduce the amount of processing memory that is required to perform the calculations and enables very large scene images to be processed. This processing arrangement further minimises the time from the reception of the data at the receiver 11 to the output of the detected targets 22.

The system 10 further comprises a target combiner 16 communicatively coupled with the processor 12, via a wireless of wired communications link 13, for facilitating the location of the targets 22 within the scene 20. The combiner 16 is arranged to receive data corresponding to the labels assigned to each element 14 of the receiver 11 at step 108 and group together elements 14 having the same label, located within a predefined range of each other at step 109. For example, elements 14 having the same label located within a predefined number of element positions of each other may be associated with the same target 22 within the scene 20, and thus grouped together to represent a single target. Equally, elements 14 having the same label, but located more than the predefined number of element positions apart may be associated with separate targets 22 within the scene 20. The target combiner 16 is found to improve the ability of users to utilise the results of the system 10.

The linking together of atmospheric correction, image analysis and target location within the same system 10 enables the processing of hyperspectral imagery at real time speeds. Once the hyperspectral image data for a particular row of elements has been processed to locate the targets 22, the processor 12 may be further arranged to output a signal to a display device 17 associated with the system at step 110, for displaying an overlay of a target representation 18 on a video image of the scene 20 or a map (not shown) of the scene 20, at the detected location at step 111. This is found to remove the need for an extensive understanding of complex hyperspectral processing and improves the rate at which detected targets can be displayed.

Whilst the invention has been described above, it extends to any inventive combination of features set out above. Although illustrative embodiments of the invention are described in detail herein with reference to the accompanying drawings, it is to be understood that the invention is not limited to these precise embodiments.

Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The skilled person will also appreciate that the steps of the method are exemplary only and that in alternative embodiments, some of them may be omitted and/or re-ordered and in some cases at least one additional step can be included. It will also be appreciated that the method can be implemented using any suitable programming language.

## Claims

1. A data processing method for processing hyperspectral image data of a scene for locating targets within the scene, the method comprising:
a) receiving hyperspectral image data from a scene at a receiver, the receiver comprising a plurality of receiver elements, each element being arranged to receive hyperspectral image data from a portion of the scene;
b) comparing the hyperspectral image data received at each element with hyperspectral image data corresponding to known targets;
c) assigning each element with a target label in dependence upon the comparison between the hyperspectral image data received at the element with hyperspectral image data of the known targets; and,
d) combining elements of the receiver having the same target label, and which are located within a predefined range of each other, to determine the location of a target within the scene.

2. A data processing method according to claim 1, further comprising generating a set of scores for each element, each score being representative of the comparison between the hyperspectral image data received at the element and hyperspectral image data of the known targets.

3. A data processing method according to claim 2, wherein the target labels are assigned by comparing the scores of the set with a threshold range.

4. A data processing method according to any preceding claim, wherein the elements of the receiver which are labelled with the same label and which reside within a predefined number of element positions from each other are combined to represent a single target detection within the scene.

5. A data processing method according to any preceding claim, wherein the hyperspectral image data received at each element is processed to correct the data for signal attenuation, prior to comparing the data with hyperspectral image data of known targets.

6. A data processing method according to any preceding claim, further comprising outputting a signal to a display device for displaying an overlay of a representation of the or each detected target on an image of the scene, the or each representation being displayed at the detected location of the corresponding target on the scene image.

7. A data processing system for processing hyperspectral image data of a scene for locating targets within the scene, the system comprising:
- a receiver having a plurality of receiver portions for separately receiving hyperspectral image data from a portion of the scene;
- a repository for hyperspectral image data of known targets;
- a processor for comparing the hyperspectral image data received at each element with hyperspectral image data of the known targets stored in the repository, and assigning each element with a target label in dependence upon the comparison between the received hyperspectral image data and hyperspectral image data of the known targets; and,
- a target combiner which is arranged to combine elements of the receiver having the same target label and which are located within a predefined range of each other, to determine the location of the target within the scene.

8. A data processing system according to claim 7, wherein the processor is further arranged to generate a set of scores for each element, each score being representative of the comparison between the received hyperspectral image data and hyperspectral image data of the known targets.

9. A data processing system according to claim 7 or 8, further comprising communication means for communicatively coupling the receiver, repository, processor and target combiner.
